# EUROPEAN PATENT SPECIFICATION

(11) **EP 4 257 652 B1**
(45) Date of publication and mention of the grant of the patent: **04.06.2025**
(21) Application number: 23166262.8
(22) Date of filing: 03.04.2023
(51) Int. Cl.: C09J 123/14, C08L 53/02

(54) **ADHESIVE COMPOSITION AND METHODS OF PREPARATION THEREOF**
KLEBSTOFFZUSAMMENSETZUNG UND VERFAHREN ZU IHRER HERSTELLUNG
COMPOSITION ADHÉSIVE ET SES PROCÉDÉS DE PRÉPARATION

(30) Priority: 05.04.2022 US 202263362468 P
(43) Date of publication of application: 11.10.2023
(73) Proprietor: Kraton Polymers Nederland B.V., 1322 CE Almere (NL)
(72) Inventor: DUPONT, Martine, Houston, Texas 77084 (US); DWARKA, Suyata, Houston, Texas 77084 (US); MIGCHELS, Peter, Houston, Texas 77084 (US)
(74) Representative: Henkel & Partner mbB

(56) References cited:
- EP-A1- 1 331 258
- WO-A1-2016/132704
- WO-A1-2019/126982

## Description

### FIELD

The present disclosure relates to an adhesive composition comprising partially hydrogenated styrenic block copolymer (p-HSBC) and amorphous polyolefin, methods of preparation, and applications thereof.

### BACKGROUND

Adhesives are often used to hold materials together in a functional manner by a surface attachment that resists separation. In industrial adhesive applications, hot melt adhesives are commonly used to bond together a wide variety of articles including disposable absorbent articles comprising non-woven substrates e.g., adult incontinence products, disposable diapers, sanitary napkins, bed pads, puppy pads, medical dressings, etc.

Hot-melt adhesives developed for these applications require easy processibility, e.g., showing low and stable hot-melt viscosities. They are also expected to exhibit high mechanical performance to conform to body movements and hold the increased volume of the absorbent material. It is also preferable to have low color and odor.

Most common adhesives can be based on polymers such as polyolefins (ethylene or propylene-based polymers) or styrenic block copolymers. Polyolefin-based formulations are typically oil-free, providing the required hot-melt stability and processability. However, polyolefin-based formulations lack mechanical and adhesion performance. Styreneisoprene-styrene (SIS) or styrene-butadiene-styrene (SBS) based adhesive formulations may provide the required adhesive and mechanical properties, but as the adhesives contain relatively high amounts of mineral oil, odor can be developed.

WO2019126982A1 relates to a hot melt adhesive composition comprising polyolefins and hydrogenated thermoplastic block copolymers for disposable products. They can be applied at low temperatures, have excellent T peel strength and low odor after being applied in the disposable product. There is a need to develop adhesive compositions for different substrates with improved properties, e.g., high elongation rates, good stability, low to negligible odor, easy processability, and adhesion performance.

### SUMMARY

In one aspect, the disclosure relates to an adhesive composition comprising or consisting essentially of or consisting of, 20 to 40 wt. % of an amorphous polyolefin having a density of less than 1 g/cm³, a glass transition temperature of less than -50 °C, a softening point of 10-120 °C, 35-60 wt.% of a tackifier, 0.1-10 wt.% of additive and 5-35 wt.% of a partially hydrogenated styrenic block copolymer. The partially hydrogenated styrenic block copolymer is obtained by hydrogenation of a styrenic block copolymer (SBC) comprising at least one polymer block A derived from a monoalkenyl arene monomer and at least one polymer block B derived from a conjugated diene monomer, the polymer block B has a hydrogenation level of less than 97 mol.% based on the total mol of the polymerized conjugated diene monomer in the polymer block B. The partially hydrogenated styrenic block copolymer has a residual unsaturation (RU) of less than 20 meq/g. The adhesive composition has a 180° peel adhesion value of 12 - 0.1 N/25 mm and an odor score of less than 2. The adhesive composition is oil free.

In the second aspect, the adhesive composition has a weight ratio of partially hydrogenated styrenic block copolymer to amorphous polyolefin in the range of 1:5 to 3:2.

In the third aspect, the amorphous polyolefin is selected from the group consisting of, polyethylene (PE), polypropylene (PP), polybutylene (PB), propylene homopolymer, propylene-ethylene copolymer, copolymers of propylene-1-butene, higher α-olefins, ethylene, propylene terpolymer, 1-butene, ethylene-propylene rubber, polyolefin elastomer (POE), and mixtures thereof.

In the fourth aspect, the adhesive composition can be used in any of, diaper, napkin core stabilization, diaper back sheet lamination, industrial filter material conversion, surgical gown, and surgical drape assembly applications.

### DESCRIPTION

The following terms will be used throughout the specification.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C".

"Selected from X₁, X₂, X₃,..., Xₙ, and mixtures thereof" means a single member of the group or more than a member of the group, e.g., X₁, X₂, X₃, ...Xₙ, or some, or all members of the group X₁-Xₙ being present.

"Block" as used herein refers to a section of a polymer molecule that comprises a plurality of identical constitutional units (monomers) and possesses at least one constitutional or configurative feature that does not appear in the immediately adjacent sections (blocks).

"Copolymer" refers to a polymer derived from more than one species of monomer.

"Block copolymer" refers to a copolymer that comprises more than one species of monomer, wherein the monomers are present in blocks. Each block is constituted of a set of monomer units different from the set of monomers of the connected surrounding blocks in the same block copolymer. Each block can be constituted of a homopolymer or a random copolymer.

"Polystyrene content" or PSC of a block copolymer refers to the weight % of vinyl aromatic, e.g., styrene in the block copolymer, calculated by dividing the sum of molecular weight of all vinyl aromatic units by the total molecular weight of the block copolymer. PSC can be determined using any suitable methodology such as proton nuclear magnetic resonance (NMR).

"Vinyl content" refers to the content of a conjugated diene that is polymerized via 1,2-addition in the case of butadiene, or via 3,4-addition in case of isoprene, resulting in a monosubstituted olefin, or vinyl group, adjacent to the polymer backbone. Vinyl content can be measured by nuclear magnetic resonance spectrometry (NMR).

"Molecular weight" or M_{w} refers to the polystyrene equivalent molecular weight in kg/mol of a polymer block or a block copolymer. M_{w} can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. M_{w} of polymers measured using GPC are polystyrene equivalent molecular weights or apparent molecular weights, measured at the peak of the GPC trace, and commonly referred to as polystyrene equivalent "peak molecular weights," designated as Mₚ. Individual GPC block M_{w} can be calculated by the difference of Mₚ measured before and after the considered block polymerization. For example, M_{w} of block B is the Mₚ of species A-B minus the Mₚ of block A.

"Residual Unsaturation (RU)" refers to the levels of unsaturation, i.e., carbon-carbon double bonds per gram of block copolymer. RU is measured using nuclear magnetic resonance.

"Hydrogenation level" (H2%) refers to the level of saturation of the olefinic double bonds into the block copolymer. It can be calculated using the following equation when producing the p-HSBC: H2% = 100* (RU before hydrogenation - RU after hydrogenation) / RU before hydrogenation.

"p-HSBC" refers to a partially hydrogenated styrenic block copolymer. The partially hydrogenated styrenic block copolymer is based on blocks of conjugated diene and styrenic monomers in which fraction of the double bonds resulting from the conjugated diene units have been reduced or hydrogenated, with "partially" meaning the conjugated bond partially (e.g., > 20%, or < 70%, or < 80%, or < 97% ) hydrogenated. The level of hydrogenation in hydrogenated vinyl aromatic polymers can be determined using UV-VIS spectrophotometry and/or proton NMR. The hydrogenation level in hydrogenated diene polymers can be determined using proton NMR.

"Amorphous" refers herein to the substantial absence of crystallinity, in particular to polymers having an enthalpy of fusion of less than 20 J/g, as measured according to ISO 11357-2 (2013).

"Oil free" composition refers to a composition where oil is not intentionally added (or absent), having 0 - 15, or 0.5 - 13, or 1 - 10, or < 8, or < 5, or < 1wt.% mineral oil present.

"Odor" herein described by its intensity and its character. Intensity is defined as the overall strength of the smell (e.g., strong, moderate, weak or slight, etc.). Character is defined as the perceived description of the of the smell (e.g., clean, lavender, no scent, etc.). Odor can be characterized by an odor score: no odor = a score of 1; a slight but detectable odor = a score of 2; some odor but not strong = a score of 3; strong odor = a score of 4; pungent odor = a score of 5. The odor score can be obtained from an Odor Panel Testing with at least 5 testers trained in olfactory awareness, sniffing techniques, standardized descriptors, and olfactometry responses.

The disclosure relates to a hot-melt oil-free adhesive composition comprising, consisting essentially of, or consisting of, a partially hydrogenated styrenic block copolymer (p-HSBC) and an amorphous polyolefin(APO). The composition can be used to bond layers in articles, and with better mechanical and adhesive performance than polyolefin-only based adhesives, meeting hot-melt viscosity targets for applications with spray equipment.

Partially Hydrogenated Styrenic Block Copolymer (p-HSBC): The p-HSBC containing ethylenic unsaturation can be prepared by copolymerizing one or more olefins, including at least one conjugated diene, by themselves or with one or more alkenyl aromatic hydrocarbon monomers. The copolymers may or may not be tapered, the individual blocks may be homopolymers or random copolymers, and the polymer molecule may be linear or branched.

In embodiments, the copolymers have a general configuration selected from: A-B-A, (A-B-A)nX, (A-B)nX, A-C-A, (A-C-A)nX, (A-C)nX, A-B-C-A, (A-B-C-A)nX, and (A-B-C)nX, wherein X is the residual of a coupling agent, and "n" refers to the number of "arms" or "branches" in each of the structure. Each radial block copolymer has a varying number of arms or branches, but typically between 2 and 25, and preferably between 2 and 7. Prior to hydrogenation, each A block is monoalkenyl arene block, each B block is at least one conjugated diene, and each C block is a copolymer block of at least one conjugated diene and at least one monoalkenyl arene.

In embodiments, the copolymer block C is distribution controlled, meaning the polymerization is controlled to result in certain characteristics of the two monomers (herein termed a "controlled distribution" polymerization, i.e., a polymerization resulting in a "controlled distribution" structure), and also results in the presence of certain mono alkenyl arene rich regions and certain conjugated diene rich regions in the polymer block. "Controlled distribution" is defined as referring to a molecular structure having the following attributes: (1) terminal regions adjacent to the mono alkenyl arene homopolymer ("A") blocks that are rich in (i.e., having a greater than average amount of) conjugated diene units; (2) one or more regions not adjacent to the A blocks that are rich in (i.e., having a greater than average number of) mono alkenyl arene units; and (3) an overall structure having relatively low blockiness. "Rich in" is defined as greater than the average amount, preferably greater than 5% of the average amount. This relatively low blockiness for the controlled distribution block can be shown by either the presence of only a single glass transition temperature (Tg), or an intermediate or median Tg between the Tg' s of the monomers when analyzed using differential scanning calorimetry ("DSC") thermal method, or via a mechanical method, or as shown via a proton nuclear magnetic resonance ("H-NMR") method. The potential for blockiness can also be inferred from measurement of the UV-visible absorbance in a wavelength range suitable for the detection of polystyryllithium end groups during the polymerization of the B block. A sharp and substantial increase in this value is indicative of a substantial increase in polystyryllithium chain ends. In this process, this will only occur if the conjugated diene concentration drops below the critical level to maintain controlled distribution polymerization.

In embodiments, the partially hydrogenated block copolymer (p-HSBC) has, prior to hydrogenation, at least one monovinyl arene polymer block and at least one polybutadiene block or polyisoprene block. In embodiments, the polybutadiene block has between 8 and 80% 1,2-structure, and the remaining block is 1,4-structured and polyisoprene block has between about 8-40 % 1,2-structure or 3,4-structure and 60-92 % of 1,4-structure, as measured using infrared absorbance. The block copolymer is selectively hydrogenated to remove substantially all unsaturation in the pendant vinyl groups and from 0- 50% of the unsaturation in the 1,4- structured portions of the block copolymer.

In embodiments, after partial hydrogenation, the copolymers have a general configuration selected from: S-BB-S, (S-BB)ₙX, S-I/EP-S, and (S-I/EP)ₙX, with n=2-7 and X is the residual of a coupling agent. Each S block is a monoalkenyl arene block. BB is butadiene (conjugated diene)-butylene block, IP is isoprene (conjugated diene)-propylene block.

The block copolymer is partially selectively hydrogenated, meaning the hydrogenated conjugated diene has a hydrogenation level of 20-97%, or 30-95%, or < 80%, or < 97%.

The block copolymer, which is selectively partially hydrogenated, contains residual aliphatic double bonds in the polymer. In embodiments, the partially hydrogenated conjugated diene has a residual unsaturation or RU of < 20 meq/g, or <15 meq/g, or < 10 meq/g, or < 8 meq/g, or > 3 meq/g, or < 5 meq/g, or 2-15 meq/g, or> 0.5 meq/g.

In embodiments, each polymer block (S) has a molecular weight of 5-20 kg/mol, or 9-12 kg/mol, or at least 9.0 kg/mol, or at least 8.5 kg/mol, or at least 5.0 kg/mol, for each of the polymer block (s).

In embodiments, the p-HSBC has an average 1,2-vinyl content of 8-80%, or 15-75%, or 25-60 wt. % 35-50%, or >35%, or < 75%, the vinyl content can be measured before hydrogenation, via proton NMR.

In embodiments, total polystyrene content (PSC) prior to hydrogenation is > 20%, or 25-40%, or >18%, or < 45%.

In embodiments, the p-HSBC has a Mw or Mₚ of 50 - 500 kg/mol, or 60 - 400 kg/mol, or 75-250 kg/mol, or < 400 kg/mol or <300 kg/mol or <200 kg/mol.

In embodiments, the p-HSBC is present in an amount of 2-50 wt. %, or 5-40 wt. %, or 8-35 wt. %, or 15-35 wt. %, or 15-25 wt.% based on the total weight of the adhesive composition.

Amorphous Poly Olefin (APO): The adhesive composition further comprises an amorphous polyolefin or a mixture of APOs thereof. The amorphous polyolefin is selected from the group consisting of: polyethylene (PE), polypropylene (PP), polybutylene (PB), homopolymers of propylene, copolymers of propylene and ethylene, copolymers of propylene and 1-butene or other higher a-olefins, terpolymers of ethylene, propylene, and 1-butene, ethylene-propylene rubber i.e., ethylene propylene diene monomer), polyolefin elastomer (POE), and mixtures thereof.

In embodiments, the amorphous polyolefin has a density of < 0.86 g/cm³, or < 0.87 g/cm³, or < 0.88 g/cm³, or < 0.89 g/cm³, < 0.90 g/cm³, or < 1 g/cm³ according to ISO 1183 and a softening point of 10-120 °C, or < 120 °C, or < 110 °C, or < 100 °C, or < 90 °C, or < 80 °C, or < 70 °C as per ASTM D3104.

In embodiments, the amorphous polyolefin comprises or consists of at least one propylene-based polymer (PbP). PbP refers to linear propylene homopolymers or copolymers produced using Ziegler or metallocene catalysts. PbP typically has a propylene content of at least 50% by weight or more. Amorphous polyolefins such as propylene-based polymers (PbP) can function as a base polymer, and also can function as a plasticizer and/or a tackifier in the formulation. In embodiments, PbP has a density of < 0.86 g/cm³, or < 0.87 g/cm³, or < 0.88 g/cm³, or < 0.89 g/cm³, or < 0.90 g/cm³, or < 1 g/cm³ according to ISO 1183 and a softening point of 10-120 °C, or < 120 °C, or < 110 °C, or < 100°C, or < 90°C, or <80 °C, or < 70 °C or , < 60 °C, or < 50 °C, as per ASTM D3104.

In embodiments, the amorphous polyolefin is present in an amount of 5-60 wt. %, or 10-50 wt.%, or 15-40 wt.%, or 20-40 wt. % by weight of the adhesive composition.

In embodiments, the weight ratio between the p-HSBC and the amorphous polyolefin is in the range of 1:8 to 5:2, or 1:5 to 3:2, or 8:1 to 2:5, or 4:1 to 2:5, or 2:1 to 1:1.

In embodiments, the amorphous polyolefin has a glass transition temperature of < -25 °C, or < -35 °C, or < -40 °C, or < -45 °C, or < -50 °C, as determined by the DSC method according to DIN 11357-2.

Tackifiers: The adhesive composition further comprises tackifiers, which can be hydrogenated or partially hydrogenated. In embodiments, a partially hydrogenated tackifier serves as a compatibilizer instead of mineral oil. A partially hydrogenated tackifier can help the blending of the adhesive components. A partially hydrogenated tackifier can also help homogenize the blend of p-HSBC and the amorphous polyolefin and provides adhesion at an acceptable moderate level.

Examples of useful tackifiers include, e.g., aliphatic and cycloaliphatic hydrocarbon resins, mixed aromatic and aliphatic modified hydrocarbon resins, aromatic modified aliphatic hydrocarbon resins, and aromatic modified aliphatic hydrocarbon resins (partially) hydrogenated version, partially or fully hydrogenated hydrocarbon resins, terpenes, modified terpenes, hydrogenated terpenes version and combinations thereof, modified rosin esters and copolymers and terpolymers of natural terpenes (e.g., styrene-terpene, alpha-methyl styrene-terpene, and vinyl toluene-terpene), phenolic-modified terpene resins and combinations thereof.

In embodiments, tackifier is present in an amount of 20 to 60 wt.%, or 25 to 55 wt.%, or 30 to 50 wt.%, or 25 to 45 wt. % by the total weight of the adhesive composition.

Optional Additives: The hot melt adhesive composition optionally includes additional components including, e.g., antioxidants, adhesion promoters, ultraviolet light stabilizers, rheology modifiers, biocides, corrosion inhibitors, dehydrators, colorants (e.g., pigments and dyes), fillers, surfactants, flame retardants, and combinations thereof.

In embodiments, antioxidants are selected from but not limited to, e.g., pentaerythritol tetrakis[3,(3,5-di-tert-butyl-4-hydroxyphenyl)propionate], 2,2'-methylene bis(4-methyl-6-tert-butylphenol), phosphites including, e.g., tris- -nonylphenyl)-phosphite (TNPP) and bis(2,4-di-tert-butylphenyl)4,4'-diphenylene-diphosphonite, di-stearyl-3,3'-thiodipropionate (DSTDP), Butylated hydroxytoluene (BHT), butylated hydroxyanisole (BHA), tertiary-butylhydroquinone (TBHQ) and combinations thereof.

In embodiments, additives are present in an amount of 0 - 15, or 0.5 - 15, or 0.1 - 12, or 1 - 10, or 2- 8, or > 1, or > 2, or < 5 wt.%, based on the total weight of the adhesive composition.

Method of Forming Adhesive Composition: The hot-melt adhesive composition is formed by mixing p-HSBC with amorphous polyolefin (e.g., propylene-based polymer), and any other ingredients, using methods known in the art, e.g., using a co-rotating twin-screw extruder at processing temperature between 180 °C and 250 °C or batch type mixers such as Z-blade mixers, with processing temperatures between 160 °C and 200 °C.

In embodiments, the adhesive composition comprises 15-35 wt.% of p-HSBC, 20-60 wt.% tackifying resin, 20-50 wt.% of amorphous poly olefin, and 0-15 wt.% additives, based on the total weight of the adhesive composition.

The adhesive composition comprises a low amount of a mineral oil ranging from 0 - 15, or 0.5 - 15, or 1 - 12, or < 10, or < 5, or < 1wt.%, based on the total weight of the adhesive composition, or essentially oil free (oil is not intentionally added). In embodiments, the adhesive composition is prepared in the absence of the mineral oil.

Properties of Hot-melt Adhesive composition: The adhesive composition is characterized as having improved mechanical and thermal properties suitable for use in high-performance applications. The adhesive has one or more or all of the following properties:

Melt viscosity of between 200-7500 cP, or >300 cP, or > 800 cP, or between 1500-2200 cP, or > 4200 cP, or < 5000 cP, measured in accordance with DIN 53019 at 160°C.

Tensile strength of at least 2 MPa, or < 5 MPa, or 4.2 MPa, or 3 MPa, or < 3 MPa, or 1.9 MPa, measured in accordance with ISO 527.

Elongation at break of more than 1000 %, or 980 %, or 900 %, or 880 %, or 750 % measured in accordance with ISO 527.

Peel adhesion (N/25mm) of 12-0.1, or < 10, or < 9, or < 8, or < 5, or < 3, or < 2.2 or < 1.8, or < 0.5, or < 0.2 N/25 mm, as determined under the 180° peel adhesion test, performed according to FTM-1 (300 mm/min) against HDPE substrate.

Softening points of 40 to 160 °C, or < 150 °C, or < 135 °C, or < 120 °C, or > 105 °C, or > 100 °C, or > 98 °C, or > 75 °C as determined by a ring and ball test according to ASTM method E28.

The adhesive composition is characterized as having a slight (weak) or negligent odor, with an odor score of < 2, or < 1.75, or < 1.5, or < 1.

Applications: The adhesive composition can be used in applications including disposable nonwoven hygienic articles, paper converting, flexible packaging, woodworking, carton, case sealing, and other assembly applications. The adhesive composition is also useful in a variety of processes used to bond a first substrate to a second substrate in lamination processes, e.g., laminating porous substrates to polymer films, porous substrates to porous substrates, polymer films to polymer films, and combinations thereof. In embodiments, the adhesive composition is used in disposable diapers and feminine sanitary napkin construction, diaper, and adult incontinent brief elastic attachment, diaper and napkin core stabilization, diaper back sheet lamination, industrial filter material conversion, surgical gown, surgical drape assembly, etc.

Examples: The following illustrative examples are intended to be nonlimiting.

The following test methods are used.

Polymer molecular weights can be determined by gel permeation chromatography (GPC) using polystyrene calibration standards according to ASTM 5296.

Tensile stress strain is measured according to according to ISO 37..

Melt flow rates (MFR) are measured according to D1238.

The components used in examples include:

Tackifier is a partially hydrogenated C5/C9 hydrocarbon resin (mixed aliphatic/aromatic resins) with glass transition temperature of 49 °C and softening point of 102 °C.

Antioxidant (AO) - a sterically hindered phenolic primary antioxidant.

Amorphous polyolefin-1 (APO-1) is a metallocene -technology based C3-C2 copolymer with a glass transition temperature of -44 °C and target viscosity of 100-300 mPa.s at 170 °C.

Amorphous polyolefin-2 (APO-2) - is a metallocene -technology based C3-C2 copolymer wax, with drop point of 87-93 °C, target viscosity of 150 mPas - 250 mPas at 170 °C, and density of 0.86-0.88 g/cm³.

In the examples, the precursor for the partially hydrogenated polymer is a linear triblock polymer of the type styrene-butadiene-styrene (A-B-A), having a molecular weight (MW) of 100-200 kg/mol.

The precursors SBC 1-3 are made into fully and partially hydrogenated styrenic block copolymers, HSBC-1 (comparative), p-HSBC-2, p-HSBC-3, at different PSC content (polystyrene), residual unsaturation (RU) levels, and MFR, as provided in Table 1.

**Table 1**

| Polymer | Structure | RU (meq /g) | Total MW (kg/mol) | Vinyl content % | PSC % | MFR g/10 min | MFR conditions |
|---|---|---|---|---|---|---|---|
| HSBC-1 (comparative) | SEBS | <1 | 83 | 78% | 20 | 30-46 | 190 °C/2.16 Kg |
| p-HSBC-2 | SBBS | 2.1 | 120 | 37 | 20 | 10 | 230 °C/2.16 Kg |
| p-HSBC-3 | SBBS | 4.0 | 110 | 24 | 30 | 4 | 230 °C/5 Kg |

Adhesive Formulation Examples 1-5: The hot-melt adhesive is made by mixing the ingredients as shown in Table 2 below. The formulations of the examples were mixed with a Z-blade at a set oil bath temperature of 180 °C.

**Table 2**

| Examples (Exam) | Exam 1* comp | Exam 2* | Exam 3* | Exam 4* comp | Exam 5* comp |
|---|---|---|---|---|---|
| APO-1 | 30 | 30 | 30 | 50 | - |
| APO-2 | - | - | - | - | 50 |
| HSBC-1 | 20 | - | - | - | - |
| p-HSBC-2 | - | 20 | - | - | - |
| p-HSBC-3 | - | - | 20 | - | - |
| Tackifier | 49 | 49 | 49 | 49 | 49 |
| Antioxidant | 1 | 1 | 1 | 1 | 1 |

| | | | | | |
|---|---|---|---|---|---|
| *Formulations- Examl-4 solvent coated on PET with a coat weight of 22 gsm. | | | | | |

Table 3 below shows the properties of examples 1-5.

**Table 3**

| Examples | HMV @160°C (cP) | Tensile Strength (MPa) | Elongation at break (%) | Softening Point °C |
|---|---|---|---|---|
| 1 (comp) | 1633 | 1.9 | 590 | 98.5 |
| 2 | 2143 | 3 | 980 | 101.5 |
| 3 | 4188 | 2.9 | 900 | 120.3 |
| 4 (comp) | 210 | not measurable | not measurable | not measurable |
| 5 (comp) | 330 | not measurable | not measurable | 75.6 |

Adhesion Properties: 180° peel adhesion (angle) and holding power (static shear) tests conducted on HDPE as shown in Table 4 below.

**Table 4**

| Examples | Peel Adhesion on HDPE (N/25mm) | Holding Power on HDPE (min) |
|---|---|---|
| 30 % APO-1 + p-HSBC-2 | 1.8 | 132.4 |
| 30 % APO-1 + p-HSBC-3 | 0.5 | 0.4 |
| 50% APO-1 | 0 | 0 |
| 50 % APO-2 | 0 | 0 |

Odor scores of the adhesive composition in Examples 1-5) are reported as shown in Table 5. The samples are placed in a closed jar at 80 °C for 1 hrs., cooled to room temperature (RT) before sniffing by a test panel at a distance of 5 cm from the jar. After 2 rounds of sniffing, the jar is closed and heated again to 80 °C for 1 hr., cooled to RT before sniffing again by the panel members at same distance from the jar.

**Table 5**

| | Example 1 | Example 2 | Example 3 | Example 4 | Example 5 |
|---|---|---|---|---|---|
| Average Odor Score | 1.6 | 1.8 | 1.7 | 1.6 | 1.7 |

Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. An adhesive composition comprising:
20 to 40 wt. % of an amorphous polyolefin having a density of less than 1 g/cm³, a glass transition temperature of < -50 °C, determined by DIN 11357-2, and a softening point of 10-120 °C as per ASTM D3104;
35 to 60 wt. % of a tackifier;
0.1 to 10 wt. % of at least an additive; and
5 to 35 wt. % of a partially hydrogenated styrenic block copolymer;
wherein the partially hydrogenated styrenic block copolymer is obtained by hydrogenation of a styrenic block copolymer comprising at least one polymer block A derived from a monoalkenyl arene monomer and at least one polymer block B derived from a conjugated diene monomer, the polymer block B has a hydrogenation level of 20 to 97 mol%, based on the total mol of the polymerized conjugated diene monomer in the polymer block B, determined using proton NMR;
wherein the partially hydrogenated styrenic block copolymer has a residual unsaturation (RU) of less than 20 meq/g, measured using nuclear magnetic resonance;
wherein the adhesive composition has a 180° peel adhesion value of 12 - 0.1 N/25 mm determined according to FTM-1, and an odor score of less than 2 according to Odor Panel Testing method as described in specification, and
wherein the adhesive composition contains 0 to 15 wt. % of mineral oil.

2. The adhesive composition of claim 1, wherein weight ratio of partially hydrogenated styrenic block copolymer to amorphous polyolefin is in the range of 1:5 to 3:2.

3. The adhesive composition of claim 1, wherein the amorphous polyolefin is selected from the group consisting of: polyethylene (PE), polypropylene (PP), polybutylene (PB), propylene homopolymer, propylene-ethylene copolymer, copolymers of propylene-1-butene, higher α-olefins, ethylene, propylene terpolymer, 1-butene, ethylene-propylene rubber, polyolefin elastomer (POE), and mixtures thereof.

4. The adhesive composition of claim 1, wherein the partially hydrogenated styrenic block copolymer has a general configuration of: A-B-A, (A-B-A)nX, (A-B)nX, A-C-A, (A-C-A)nX, (A-C)nX, A-B-C-A, or (A-B-C-A)nX, and
wherein prior to partial hydrogenation;
each A block is derived from a monoalkenyl arene;
each B block is derived from a conjugated diene ;
each C block is a copolymer block derived from at least one conjugated diene and at least one monoalkenyl arene;
x is residual of a coupling agent, and
n = 2 to 7.

5. The adhesive composition of claim 4, wherein the block B is derived from any of butadiene, isoprene, or mixtures thereof; and the block A is derived fromthe group consisting of polymerized unsubstituted styrene, para-substituted styrene, ortho-substituted styrene, meta-substituted styrene, alpha-methylstyrene, 1,1-diphenylethylene, 1,2-diphenylethylene, and mixtures thereof.

6. The adhesive composition of claim 4, wherein the block B is derived from butadiene,
wherein the polymerized butadiene block has 8 to 80 % of a 1,2-structure and 20 to 92 % of a 1,4-structure, as measured using infrared absorbance;
wherein the 1,2-structure is selectively hydrogenated to remove all residual unsaturation, and the vinyl groups in 1,4-structure is selectively hydrogenated to remove less than 50% of residual unsaturation.

7. The adhesive composition of claim 4, wherein the block B is derived from isoprene,
wherein the polymerized isoprene block has 8 to 40 % of a 1,2-structure or a 3,4-structure and 60 to 92 % of 1,4-structure as measured using infrared absorbance;
wherein the 1,2-structure is selectively hydrogenated to remove all residual unsaturation, and the vinyl groups in 1,4-structure is selectively hydrogenated to remove less than 50% of residual unsaturation.

8. The adhesive composition of claim 1, wherein the partially hydrogenated styrenic block copolymer has a general configuration selected from: S-BB-S, (S-BB)ₙX, S-I/EP-S, (S-I/EP)ₙX and mixtures thereof;
wherein:
n=2-7 and X is the residual of a coupling agent;
each S block is derived from monoalkenyl arene block;
each BB block is a butadiene-butylene block; and
each I/EP block is an isoprene / ethylene-propylene block.

9. The adhesive composition of any of claims 1 -5, wherein the partially hydrogenated styrenic block copolymer has a peak molecular weight Mₚ of 75 to 250 kg/mol, measured with gel permeation chromatography.

10. The adhesive composition of any of claims 1 -5, wherein the partially hydrogenated styrenic block copolymer has a residual unsaturation (RU) of 2 to 15 meq /g.

11. The adhesive composition of any of claims 1 -5, wherein the partially hydrogenated styrenic block copolymer has a polystyrene content (PSC) of < 45% and a vinyl content of 15-75%.

12. The adhesive composition of any of claims 1 -5, wherein the adhesive composition has at least one of:
a viscosity of less than 10,000 cP at 160 °C measured in accordance with DIN 53019 at 160 °C;
an elongation at break of greater than 750%, measured in accordance with ISO 527;
a 180° peel adhesion value of 5-0.1 N/25 mm, as determined according to FTM -1; and
a softening point of 70 °C to 150 °C, according to Ring and Ball method (DIN test 52011).

13. The adhesive composition of any of claims 1 -5, wherein the adhesive composition is prepared in the absence of a mineral oil.

14. The adhesive composition of any of claims 1 -5, wherein the tackifier is selected from the group consisting of: aliphatic and cycloaliphatic hydrocarbon resins, mixed aromatic and aliphatic modified hydrocarbon resins, aromatic modified aliphatic hydrocarbon resins, partially hydrogenated aromatic modified aliphatic hydrocarbon resins, partially or fully hydrogenated hydrocarbon resins, terpenes, modified terpenes, hydrogenated terpenes, modified rosin ester, styrene-terpene, alpha-methyl styrene-terpene, vinyl toluene-terpene, phenolic-modified terpene resin and combinations thereof.

15. Use of an adhesive composition of any of claims 1 -5 for any of: diaper, napkin core stabilization, diaper back sheet lamination, industrial filter material conversion, surgical gown, and surgical drape assembly applications.

## Patentansprüche

1. Klebstoffzusammensetzung, umfassend:
20 bis 40 Gew.-% eines amorphen Polyolefins mit einer Dichte von weniger als 1 g/cm³, einer Glasübergangstemperatur von < -50 °C, bestimmt nach DIN 11357-2, und einem Erweichungspunkt von 10-120 °C gemäß ASTM D3104;
35 bis 60 Gew.-% eines Klebrigmachers;
0,1 bis 10 Gew.-% zumindest eines Additivs; und
5 bis 35 Gew.-% eines teilweise hydrierten Styrol-Block-Copolymers;
wobei das teilweise hydrierte Styrol-Block-Copolymer durch Hydrierung eines Styrol-Block-Copolymers erhalten wird, das zumindest einen Polymerblock A, der von einem Monoalkenylaren-Monomer abgeleitet ist, und zumindest einen Polymerblock B, der von einem konjugierten Dien-Monomer abgeleitet ist, umfasst, wobei der Polymerblock B einen Hydrierungsgrad von 20 bis 97 Mol-%, bezogen auf die Gesamtmolmenge des polymerisierten konjugierten Dien-Monomers in dem Polymerblock B, aufweist, bestimmt mittels Protonen-NMR; wobei das teilweise hydrierte Styrol-Block-Copolymer eine verbleibende Ungesättigtheit (RU) von weniger als 20 meq/g aufweist, gemessen mittels Kernspinresonanz;
wobei die Klebstoffzusammensetzung einen 180°-Schälfestigkeitswert von 12 bis 0,1 N/25 mm, bestimmt gemäß FTM-1, und einen Geruchswert von weniger als 2 gemäß dem Geruchspanel-Prüfungsverfahren, wie in der Beschreibung beschrieben, aufweist, und
wobei die Klebstoffzusammensetzung 0 bis 15 Gew.-% Mineralöl enthält.

2. Klebstoffzusammensetzung nach Anspruch 1, wobei das Gewichtsverhältnis von teilweise hydriertem Styrol-Block-Copolymer zu amorphem Polyolefin im Bereich von 1:5 bis 3:2 liegt.

3. Klebstoffzusammensetzung nach Anspruch 1, wobei das amorphe Polyolefin ausgewählt ist aus der Gruppe bestehend aus: Polyethylen (PE), Polypropylen (PP), Polybutylen (PB), Propylen-Homopolymer, Propylen-Ethylen-Copolymer, Copolymeren von Propylen-1-buten, höheren α-Olefinen, Ethylen, Propylen-Terpolymer, 1-Buten, Ethylen-Propylen-Kautschuk, Polyolefin-Elastomer (POE) und Gemischen davon.

4. Klebstoffzusammensetzung nach Anspruch 1, wobei das teilweise hydrierte Styrol-Block-Copolymer eine allgemeine Konfiguration aufweist von: A-B-A, (A-B-A)nX, (A-B)nX, A-C-A, (A-C-A)nX, (A-C)nX, A-B-C-A oder (A-B-C-A)nX, und
wobei vor der teilweisen Hydrierung;
jeder Block von einem Monoalkenylaren abgeleitet ist;
jeder B-Block von einem konjugierten Dien abgeleitet ist;
jeder C-Block ein Copolymerblock ist, der von zumindest einem konjugierten Dien und zumindest einem Monoalkenylaren abgeleitet ist;
x ein Rest eines Kopplungsmittels ist, und
n = 2 bis 7.

5. Klebstoffzusammensetzung nach Anspruch 4, wobei der Block B von einem Butadien, Isopren oder Gemischen davon abgeleitet ist; und der Block A aus der Gruppe bestehend aus polymerisiertem unsubstituiertem Styrol, parasubstituiertem Styrol, ortho-substituiertem Styrol, meta-substituiertem Styrol, alpha-Methylstyrol, 1,1-Diphenylethylen, 1,2-Diphenylethylen und Gemischen davon abgeleitet ist.

6. Klebstoffzusammensetzung nach Anspruch 4, wobei der Block B von Butadien abgeleitet ist,
wobei der polymerisierte Butadienblock 8 bis 80 % einer 1,2-Struktur und 20 bis 92 % einer 1,4-Struktur aufweist, gemessen mittels Infrarotabsorption; wobei die 1,2-Struktur selektiv hydriert ist, um die gesamte verbleibende Ungesättigtheit zu entfernen, und die Vinylgruppen in der 1,4-Struktur selektiv hydriert sind, um weniger als 50 % der verbleibenden Ungesättigtheit zu entfernen.

7. Klebstoffzusammensetzung nach Anspruch 4, wobei der Block B von Isopren abgeleitet ist,
wobei der polymerisierte Isoprenblock 8 bis 40 % einer 1,2-Struktur oder einer 3,4-Struktur und 60 bis 92 % einer 1,4-Struktur aufweist, gemessen mittels Infrarotabsorption;
wobei die 1,2-Struktur selektiv hydriert ist, um die gesamte verbleibenden Ungesättigtheit zu entfernen, und die Vinylgruppen in der 1,4-Struktur selektiv hydriert sind, um weniger als 50 % der verbleibenden Ungesättigtheit zu entfernen.

8. Klebstoffzusammensetzung nach Anspruch 1, wobei das teilweise hydrierte Styrol-Block-Copolymer eine allgemeine Konfiguration aufweist, die ausgewählt ist aus: S-BB-S, (S-BB)ₙX, S-I/EP-S, (S-I/EP)ₙX und Gemischen davon;
wobei:
n = 2 bis 7 und X der Rest eines Kopplungsmittels ist;
jeder S-Block von einem Monoalkenylarenblock abgeleitet ist;
jeder BB-Block ein Butadien-Butylen-Block ist; und
jeder I/EP-Block ein Isopren/Ethylen-Propylen-Block ist.

9. Klebstoffzusammensetzung nach einem der Ansprüche 1 bis 5, wobei das teilweise hydrierte Styrol-Block-Copolymer ein Peak-Molekulargewicht Mₚ von 75 bis 250 kg/mol aufweist, gemessen mittels Gelpermeationschromatographie.

10. Klebstoffzusammensetzung nach einem der Ansprüche 1 bis 5, wobei das teilweise hydrierte Styrol-Block-Copolymer eine verbleibende Ungesättigtheit (RU) von 2 bis 15 meq/g aufweist.

11. Klebstoffzusammensetzung nach einem der Ansprüche 1 bis 5, wobei das teilweise hydrierte Styrol-Block-Copolymer einen Polystyrolgehalt (PSC) von < 45 % und einen Vinylgehalt von 15 bis 75 % aufweist.

12. Klebstoffzusammensetzung nach einem der Ansprüche 1 bis 5, wobei die Klebstoffzusammensetzung zumindest eines aufweist von:
einer Viskosität von weniger als 10.000 cP bei 160 °C gemessen nach DIN 53019 bei 160°C;
einer Bruchdehnung von mehr als 750 %, gemessen gemäß ISO 527;
einem 180°-Abziehadhäsionswert von 5 bis 0,1 N/25 mm, bestimmt gemäß FTM-1; und
einem Erweichungspunkt von 70 °C bis 150 °C gemäß dem Ring-und-Kugel-Verfahren (Prüfung nach DIN 52011).

13. Klebstoffzusammensetzung nach einem der Ansprüche 1 bis 5, wobei die Klebstoffzusammensetzung ohne ein Mineralöl hergestellt ist.

14. Klebstoffzusammensetzung nach einem der Ansprüche 1 bis 5, wobei der Klebrigmacher ausgewählt ist aus der Gruppe bestehend aus: aliphatischen und cycloaliphatischen Kohlenwasserstoffharzen, gemischten aromatisch und aliphatisch modifizierten Kohlenwasserstoffharzen, aromatisch modifizierten aliphatischen Kohlenwasserstoffharzen, teilweise hydrierten aromatisch modifizierten aliphatischen Kohlenwasserstoffharzen, teilweise oder vollständig hydrierten Kohlenwasserstoffharzen, Terpenen, modifizierten Terpenen, hydrierten Terpenen, modifiziertem Kolophoniumester, Styrol-Terpen, alpha-Methylstyrol-Terpen, Vinyltoluol-Terpen, phenolmodifiziertem Terpenharz und Kombinationen davon.

15. Verwendung einer Klebstoffzusammensetzung nach einem der Ansprüche 1 bis 5 für eines von: Windel, Stabilisierung von Windelkernen, Laminierung der rückseitigen Schicht von Windeln, Umwandlung von industriellem Filtermaterial, Operationskittel und Anwendungen für chirurgische Abdeckungen.

## Revendications

1. Composition adhésive comprenant :
20 à 40 % en poids d'une polyoléfine amorphe ayant une densité inférieure à 1 g/cm³, une température de transition vitreuse < -50 °C, déterminée par DIN 11357-2, et un point de ramollissement de 10 à 120 °C selon ASTM D3104 ;
35 à 60 % en poids d'un agent poisseux ; et
0,1 à 10 % en poids d'au moins un additif ; et
5 à 35 % en poids d'un copolymère styrénique séquencé partiellement hydrogéné ;
dans laquelle le copolymère styrénique séquencé partiellement hydrogéné est obtenu par hydrogénation d'un copolymère styrénique séquencé comprenant au moins une séquence polymère A dérivée d'un monomère de monoalcénylarène et au moins une séquence polymère B dérivée d'un monomère de diène conjugué, la séquence polymère B a un niveau d'hydrogénation de 20 à 97 % en moles, sur la base des moles totales du monomère de diène conjugué polymérisé dans la séquence polymère B, déterminées en utilisant la RMN du proton ;
dans laquelle le copolymère styrénique séquencé partiellement hydrogéné a une insaturation résiduelle (RU) inférieure à 20 meq/g, mesurée à l'aide de la résonance magnétique nucléaire ;
dans laquelle la composition adhésive a une valeur d'adhérence au pelage à 180° de 12 - 0,1 N/25 mm déterminée selon FTM-1, et un score d'odeur inférieur à 2 selon la méthode de test d'odeur par un panel (Odor Panel Testing) telle que présentée dans la description, et
dans laquelle la composition adhésive contient 0 à 15 % en poids d'huile minérale.

2. Composition adhésive selon la revendication 1, dans laquelle le rapport pondéral du copolymère styrénique séquencé partiellement hydrogéné à la polyoléfine amorphe est dans la plage de 1:5 à 3:2.

3. Composition adhésive selon la revendication 1, dans laquelle la polyoléfine amorphe est choisie dans le groupe constitué par : polyéthylène (PE), polypropylène (PP), polybutylène (PB), homopolymère de propylène, copolymère propylène-éthylène, copolymères de propylène-1-butène, α-oléfines supérieures, éthylène, terpolymère de propylène, 1-butène, caoutchouc éthylène-propylène, élastomère de polyoléfine (POE) et des mélanges de ceux-ci.

4. Composition adhésive selon la revendication 1, dans laquelle le copolymère styrénique séquencé partiellement hydrogéné a une configuration générale suivante : A-B-A, (A-B-A)nX, (A-B)nX, A-C-A, (A-C-A)nX, (A-C)nX, A-B-C-A, ou (A-B-C-A)nX, et dans laquelle avant l'hydrogénation partielle ;
chaque séquence A est dérivée d'un monoalcénylarène ; chaque séquence B est dérivée d'un diène conjugué ; chaque séquence C est une séquence de copolymère dérivée d'au moins un diène conjugué et d'au moins un monoalcénylarène ;
X est un résidu d'un agent de couplage, et
n = 2 à 7.

5. Composition adhésive selon la revendication 4, dans laquelle la séquence B est dérivée de l'un quelconque parmi le butadiène, l'isoprène ou des mélanges de ceux-ci ; et la séquence A est dérivée du groupe constitué par le styrène non substitué polymérisé, le styrène substitué en para, le styrène substitué en ortho, le styrène substitué en méta, l'alpha-méthylstyrène, le 1,1-diphényléthylène, le 1,2- diphényléthylène et des mélanges de ceux-ci.

6. Composition adhésive selon la revendication 4, dans laquelle la séquence B est dérivée du butadiène,
dans laquelle la séquence de butadiène polymérisé a 8 à 80 % d'une structure 1,2 et à 92 % d'une structure 1,4, telle que mesurée en utilisant l'absorbance infrarouge ;
dans laquelle la structure 1,2 est sélectivement hydrogénée pour éliminer toute insaturation résiduelle, et les groupes vinyle dans la structure 1,4 sont sélectivement hydrogénés pour éliminer moins de 50 % d'insaturation résiduelle.

7. Composition adhésive selon la revendication 4, dans laquelle la séquence B est dérivée de l'isoprène,
dans laquelle la séquence d'isoprène polymérisé a 8 à 40 % d'une structure 1,2 ou d'une structure 3,4 et 60 à 92 % d'une structure 1,4 telle que mesurée en utilisant l'absorbance infrarouge ;
dans laquelle la structure 1,2 est sélectivement hydrogénée pour éliminer toute insaturation résiduelle, et les groupes vinyle dans la structure 1,4 sont sélectivement hydrogénés pour éliminer moins de 50 % d'insaturation résiduelle.

8. Composition adhésive selon la revendication 1, dans laquelle le copolymère styrénique séquencé partiellement hydrogéné a une configuration générale choisie parmi : S-BB-S, (S-BB)ₙX, S-I/EP-S, (S-
I/EP)ₙX et des mélanges de ceux-ci ;
dans laquelle :
n = 2 à 7, et X est le résidu d'un agent de couplage ;
chaque séquence S est dérivée d'une séquence de monoalcénylarène ;
chaque séquence BB est une séquence butadiène-butylène ; et
chaque séquence I/EP est une séquence isoprène/éthylène- propylène.

9. Composition adhésive selon l'une quelconque des revendications 1 à 5, dans laquelle le copolymère styrénique séquencé partiellement hydrogéné a un poids moléculaire maximal Mₚ de 75 à 250 kg/mol, mesuré par chromatographie par perméation de gel.

10. Composition adhésive selon l'une quelconque des revendications 1 à 5, dans laquelle le copolymère styrénique séquencé partiellement hydrogéné a une insaturation résiduelle (RU) de 2 à 15 meq/g.

11. Composition adhésive selon l'une quelconque des revendications 1 à 5, dans laquelle le copolymère styrénique séquencé partiellement hydrogéné a une teneur en polystyrène (PSC) < 45 % et une teneur en vinyle de 15 à 75 %.

12. Composition adhésive selon l'une quelconque des revendications 1 à 5, dans laquelle la composition adhésive présente au moins l'un parmi :
une viscosité inférieure à 10 000 cP à 160 °C mesurée selon DIN 53019 à 160 °C ;
un allongement à la rupture supérieur à 750 %, mesuré selon ISO 527 ;
une valeur d'adhérence au pelage à 180° de 5 - 0,1 N/25 mm, telle que déterminée selon FTM -1 ; et
un point de ramollissement de 70 °C à 150 °C, selon la méthode bille et anneau (Ring and Ball) (test DIN 52011).

13. Composition adhésive selon l'une quelconque des revendications 1 à 5, dans laquelle la composition adhésive est préparée en l'absence d'huile minérale.

14. Composition adhésive selon l'une quelconque des revendications 1 à 5, dans laquelle l'agent poisseux est choisi dans le groupe constitué par : résines hydrocarbonées aliphatiques et cycloaliphatiques, résines hydrocarbonées modifiées aromatiques et aliphatiques mixtes, résines hydrocarbonées aliphatiques modifiées aromatiques, résines hydrocarbonées aliphatiques modifiées aromatiques partiellement hydrogénées, résines hydrocarbonées partiellement ou entièrement hydrogénées, terpènes, terpènes modifiés, terpènes hydrogénés, ester de colophane modifié, styrène-terpène, alpha-méthyl styrène-terpène, vinyle toluène-terpène, résine terpène modifiée phénolique et des combinaisons de ceux-ci.

15. Utilisation d'une composition adhésive selon l'une quelconque des revendications 1 à 5 pour l'une quelconque des applications suivantes : couches, stabilisation de la partie centrale de serviettes hygiéniques, stratification du voile postérieur des couches, conversion de matériau filtrant industriel, blouse chirurgicale et ensemble de champ opératoire.
